# FASCICULE DE BREVET EUROPEEN

(11) **EP 3 129 683 B1**
(45) Date de publication et mention de la délivrance du brevet: **18.05.2022**
(21) Numéro de dépôt: 15715338.8
(22) Date de dépôt: 12.03.2015
(51) Int. Cl.: F16H 61/32, F16H 63/30

(54) **PROCEDE DE COMMANDE D'UN ACTIONNEUR DE PASSAGE DE VITESSES ET ACTIONNEUR DE PASSAGE CORRESPONDANT**
VERFAHREN ZUR STEUERUNG EINES GANGSCHALTAKTUATORS UND ENTSPRECHENDER SCHALTAKTUATOR
METHOD FOR CONTROLLING A GEAR SHIFT ACTUATOR AND CORRESPONDING SHIFT ACTUATOR

(30) Priorité: 07.04.2014 FR 1453041
(43) Date de publication de la demande: 15.02.2017
(73) Titulaire: Renault s.a.s, 92100 Boulogne Billancourt (FR); NISSAN MOTOR CO., LTD., Yokohama-shi, Kanagawa 220-8623 (JP)
(72) Inventeur: MERIENNE, Ludovic, F-91190 Gif sur Yvette (FR)
(74) Mandataire: Renault Group
(86) Numéro de dépôt international: PCT/FR2015/050617
(87) Numéro de publication internationale: WO 2015/155429

(56) Documents cités:
- EP-A1- 2 385 270
- DE-A1- 19 917 215
- FR-A1- 2 818 349
- FR-A1- 2 901 334
- FR-A1- 2 988 800

## Description

La présente invention concerne la commande des passages de vitesses dans une boîte de vitesses à arbres parallèles, munies d'un actionneur.

Elle a pour objet un procédé de commande d'un actionneur de passage à baladeur de boîte de vitesses comportant un élément de commande de fourchette de décrabotage et de crabotage de pignons sur un arbre qui reçoit le couple d'une machine de traction alimentée par une batterie haute tension, cet élément de commande étant placé en amont d'un système mécanique d'assistance mécanique à ressort et régulé en position par un moteur d'actionnement à courant continu.

L'invention a également pour objet un dispositif d'actionnement de passage de vitesses comprenant un élément de commande de fourchette de passage assurant le décrabotage et le crabotage de pignons sur un arbre de la boîte. Cet élément de commande est régulé en position par un moteur d'actionnement à courant continu alimenté par un réseau de bord du véhicule muni d'un organe de modulation de tension. Dans ce dispositif, l'élément de commande est placé en amont d'un système mécanique d'assistance mécanique à ressort, facilitant l'engagement des dents du baladeur entre celles du pignon.

L'invention trouve une application privilégiée, mais non limitative, sur des boîtes de vitesse de type « robotisée », dont le fonctionnement est celui d'une boîte manuelle à passages de vitesses automatisé, sans mécanismes de synchronisation des pignons.

Dans les systèmes de commande internes de passage de vitesses sans mécanismes de synchronisation, on utilise généralement des baladeurs à dents plates, ou « clabots », qui viennent en butée contre les dents du pignon de vitesse à craboter, avant de tourner légèrement par rapport au pignon pour pouvoir s'engager entre ses dents.

Pour atteindre les niveaux de confort de passage exigés, on peut utiliser des dispositifs d'aide au passage, qui font intervenir un ressort de résistance, capable d'accumuler de l'énergie en se comprimant pendant la phase de synchronisation et de la libérer l'issue de cette phase, pour faciliter le crabotage du pignon.

Par la publication FR 2 988 800, on connaît un système d'actionnement de baladeur à clabots, comportant un pontet rigide de déplacement de fourchette muni de deux bras engagés autour d'un axe de commande, de manière à autoriser son propre déplacement axial le long de cet axe, sous le contrôle d'un organe externe. Le système comporte en outre un ressort de résistance, entouré autour de l'axe de fourchette entre les deux bras du pontet et deux bagues d'arrêt en appui entre les extrémités du ressort et les bras du pontet, de manière à pouvoir coulisser avec un débattement limité le long de l'axe. Le ressort emmagasine l'énergie fournie par l'actionneur, lorsque les dents du baladeur et du pignon sont en butée. Il la libère lorsque le crabotage est possible, en accélérant la fourchette. L'accélération obtenue dépend de la compression du ressort, et donc du couple transmis par le moteur électrique pendant la phase où les dents sont en butée. Par la publication FR 2 818 349, on connaît un autre système d'actionnement de baladeur à clabots où l'élément de commande est régulé en position par un moteur d'actionnement à courant continu.

Lors d'un changement de vitesses, il est cependant important de minimiser le temps pris par l'ensemble des opérations nécessaires au bon déroulement du passage.

Par la publication DE 199 17 215, on connaît un dispositif d'actionnement de passage de vitesses motorisé, comprenant un commutateur qui place la tension d'alimentation de son moteur d'actionnement sur une valeur intermédiaire.

La présente invention vise à optimiser le déroulement des passages de vitesse, sans utiliser de commutateur.

Dans ce but, elle propose que ce que la tension de bord du véhicule soit élevée temporairement pendant les opérations de dé-crabotage et de crabotage de pignons, sur une valeur supérieure à sa tension d'alimentation normale.

Conformément à l'invention, le convertisseur de tension du réseau de bord module temporairement la tension du réseau de bord sur une valeur supérieure à sa tension d'alimentation normale, pendant les opérations de décrabotage et de crabotage de pignons, par un convertisseur de courant continu alimentant ce réseau à partir de la batterie haute tension.

La présente invention sera mieux comprise à la lecture de la description suivante d'un mode de réalisation non limitatif de l'invention, en se reportant aux dessins annexés, sur lesquels :
- la figure 1 présente le principe mécanique de l'actionneur,
- la figure 2 montre les étapes d'un changement de rapport
- la figure 3, illustre la régulation avec une tension du réseau de bord classique à 12V,
- la figure 4 met en évidence l'amélioration de performance atteinte en modifiant cette tension, et
- la figure 5 montre une nouvelle séquence avec modification de la tension du moteur d'entraînement de l'actionneur.

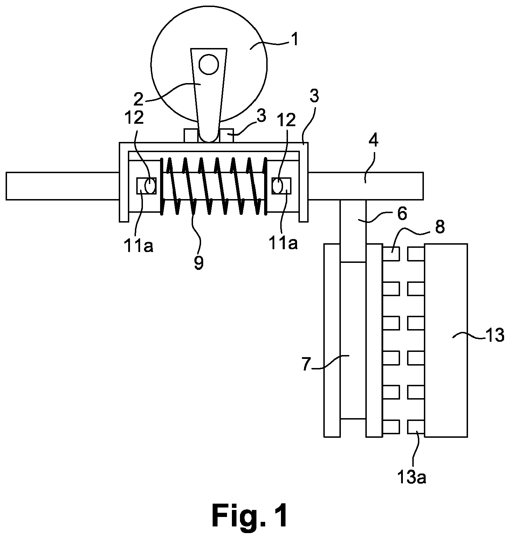

L'actionneur électrique de passage de vitesses illustré de manière non limitative par la figure 1 est sous le contrôle d'un moteur électrique 1, lié en rotation avec un élément de commande, tel qu'un doigt de passage de vitesses 2. Le doigt 2 est engagé dans la gorge 3 d'un pontet rigide 3, tel que décrit dans la publication FR 2 988 800, qui est muni de deux bras 3a engagés autour de l'axe de commande 4 d'une fourchette 6 de commande d'un baladeur 7 à dents plates, ou « clabots » 8. Le déplacement du baladeur s'effectue sous le contrôle du moteur 1, qui reçoit l'information de position d'un capteur de position, et d'un ressort de résistance 9 enroulé autour de l'axe 4 entre les deux bras 3a du pontet. Deux bagues 11 limitent la compression maximum du ressort 9 et le débattement du pontet sur l'axe, grâce à la présence de lumières oblongues 11a dans lesquelles se déplace une goupille 12, fixée sur l'axe 4. En résumé, cet actionneur comporte un élément de commande de fourchette de passage assurant le dé-crabotage et le crabotage de pignons sur un arbre de la boîte. Cet élément de commande est régulé en position par un moteur d'actionnement à courant continu alimenté par le réseau de bord du véhicule et placé en amont d'un système mécanique d'assistance mécanique à ressort facilitant l'engagement des dents du baladeur entre celles du pignon. Il fonctionne de la manière suivante.

Lors de l'engagement d'une vitesse, l'ensemble constitué du pontet, du ressort, des bagues, de l'axe et de fourchette se déplace en bloc jusqu'à ce que la fourchette rencontre une résistance liée à la mise en appui des dents 8 du baladeur contre les dents 13a du pignon 13. Le ressort 9 est comprimé entre les bagues 11 par la poursuite du déplacement du pontet 3 dans une phase de chargement du ressort, entre la mise en appui du baladeur contre le pignon, et son crabotage sur celui-ci, c'est-à-dire l'engagement de ses dents entre celles du pignon. Le ressort se détend alors en restituant l'énergie qu'il a accumulée, pour assister l'engagement du baladeur sur le pignon.

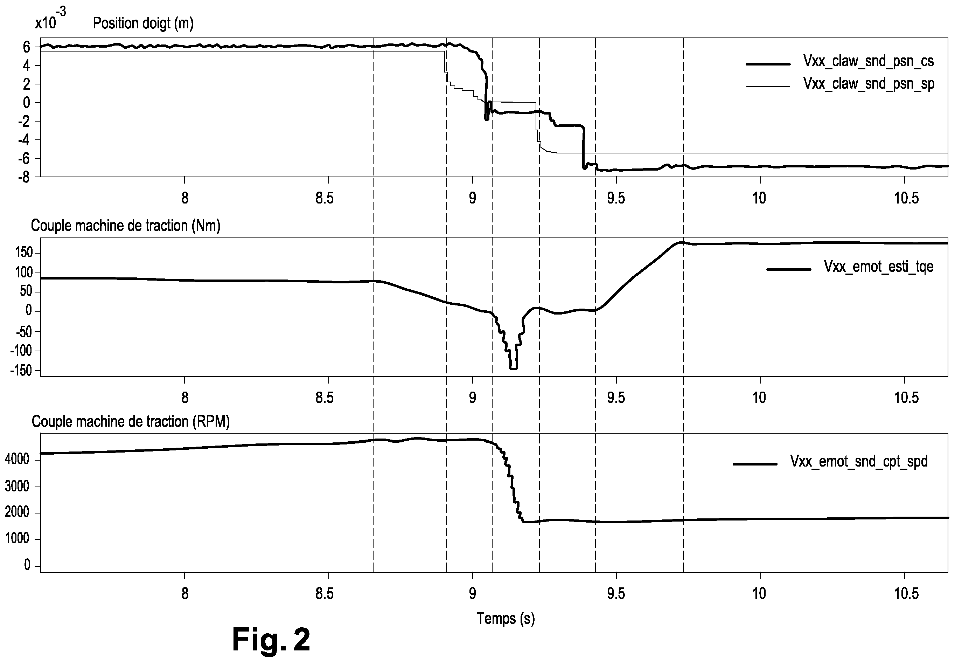

La commande se fait par la tension appliquée sur le moteur électrique de l'actionneur 1, qui est de préférence une machine à courant continu. C'est la position de la fourchette qui détermine le passage des vitesses, mais cette mesure n'est pas accessible à la régulation. La régulation de commande s'effectue sur la position du doigt 2, qui est en amont des moyens d'assistance dans la chaîne cinématique de commande. Les variables mesurées et utilisées dans la régulation, sont la position du doigt 2 et le courant d'alimentation du moteur. Sur les trois courbes de la figure 2, on a représenté respectivement l'évolution de la position du doigt en millimètres, celle du couple de traction en newton mètres, et du régime de la machine de traction en tours par minute (RPM) . En se reportant à la figure 2, on voit que la commande de l'actionneur inclut les étapes suivantes lors d'une opération de changement de rapport :
a) annulation du couple délivré par la machine de traction du véhicule, entraînant l'arbre,
b) dé-crabotage du pignon fou du premier rapport (rapport initial) grâce à la régulation de position du doigt 2 : le moteur d'entraînement se retrouve alors en roue libre (ou position neutre) (étape 2),
c) synchronisation de l'arbre avec le pignon fou du deuxième rapport (rapport final) par la machine de traction, pour pouvoir engager le rapport désiré (étape 3),
d) crabotage du deuxième pignon grâce à la régulation de position du doigt 2 (étape 4).
e) remise de couple sur la machine de traction (étape 5).

La figure 2 indique la durée de chacune de ces étapes. Sur sa deuxième courbe, on voit que l'annulation du couple fourni par la machine électrique de traction (étape 1), prend environ 400ms. Le dé-crabotage (étape 2) prend environ 200ms (deuxième courbe). La phase de synchronisation (étape 3) prend ensuite environ 150ms. Après la synchronisation, le crabotage (étape 4) prend à nouveau 200ms.

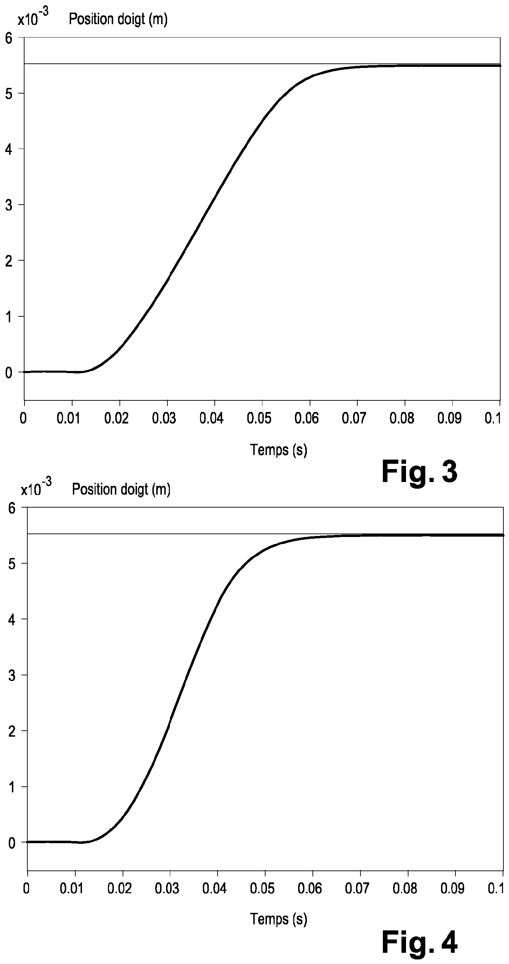

La figure 3 illustre les performances de la régulation de position du doigt, avec une tension du réseau de bord classique à 12V. Comme montré sur la figure 4, si l'on augmente la tension du réseau de bord à 16V, on peut améliorer les performances de la régulation. Le gain sur le crabotage est de l'ordre de 10ms. Etant donné que la régulation intervient pour le crabotage et le dé-crabotage du pignon, le gain de temps sur l'opération complète de changement de rapport est double, soit environ 20ms sur un passage.

L'actionneur de boîte est normalement alimenté par la batterie 12V du véhicule. Les moteurs à courant continu permettant de faire bouger le doigt de l'actionneur sont dimensionnés pour fonctionner dans cet ordre de grandeur de tension. Par ailleurs, les performances de la régulation de position du doigt dépendent de la puissance des moteurs insérés dans la boîte. Cette puissance est limitée par la tension du réseau de bord. Or, les véhicules électriques ou hybrides disposent généralement d'une batterie de bord de 12V (batterie BT) et d'une batterie de plus forte tension (batterie HT), par exemple 400V, destinée principalement à alimenter une machine de traction du véhicule. Un convertisseur de tension continu/continu (DC/DC en anglais pour Direct Current/Direct Current), joue alors le rôle de l'alternateur d'un véhicule thermique classique. Le DC/DC puise de l'énergie de la batterie HT du véhicule, et alimente le réseau de bord pour maintenir l'état de charge de la batterie 12V.

A l'aide du DC/DC, il est possible de moduler la tension du réseau de bord, notamment pour recharger la batterie 12V. Le convertisseur peut donc être utilisé pour moduler la tension du moteur d'actionnement de l'élément de commande 2, dans le but d'améliorer les performances de la régulation. Cet objectif est atteint en minimisant la durée totale de la régulation, pour rendre le changement de rapport pratiquement imperceptible. La solution consiste à augmenter temporairement la tension du réseau de bord en prévision de l'utilisation de l'actionneur de passage. Le DC/DC module temporairement la tension du réseau de bord appliquée au moteur d'actionnement, sur une valeur supérieure à sa tension d'alimentation normale pendant les opérations de décrabotage et de crabotage de pignons.

L'élévation de la tension d'alimentation du réseau de bord est activée par l'intermédiaire du DC/DC, pendant l'annulation du couple de la machine de traction du véhicule qui se produit au début de chaque passage de vitesse. Cette annulation prend nécessairement un certain temps. Pour des contraintes d'agrément, on ne peut annuler le couple brutalement, de sorte qu'il reste généralement supérieur à une centaine de ms. Cette durée est suffisante pour permettre au DC/DC de réagir à sa consigne de tension et augmenter la tension du réseau de bord. La tension d'alimentation du réseau de bord est élevée temporairement. Cette élévation de tension est activée pendant l'annulation du couple de traction précédant le décrabotage d'un pignon. Le convertisseur de courant est ensuite rétabli sur sa consigne de base, après le crabotage d'un nouveau pignon.

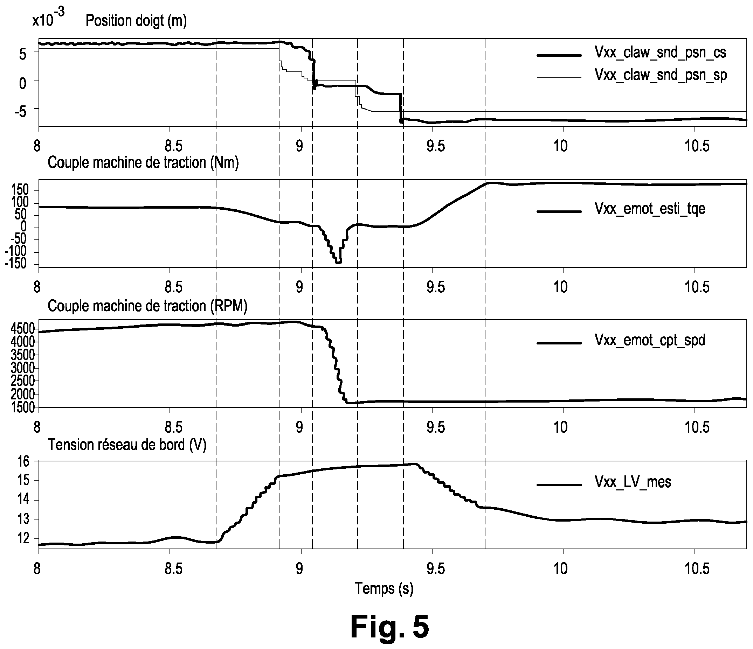

La nouvelle séquence de changement de rapport, illustrée par la figure 5, devient :
a) augmentation temporaire de la consigne de tension appliquée par le réseau de bord au moteur d'actionnement de l'élément de commande 6 pendant l'annulation du couple de la machine de traction du véhicule,
b) décrabotage du pignon transmettant le couple sur un premier rapport,
c) synchronisation de l'arbre de boîte et du pignon utilisé sur un deuxième rapport,
d) crabotage du deuxième pignon,
e) retour à la consigne de base sur le réseau de bord lors de la reprise de couple de la machine de traction.

En conclusion, l'invention permet de réduire le temps de passage des rapports sans impact négatif sur l'agrément (contrairement à une réduction des temps d'annulation et de remise de couple). Elle tire profit des fonctionnalités de systèmes déjà présent sur le véhicule, et ne requiert qu'une adaptation logicielle, pour moduler la consigne de tension du DC/DC.

## Revendications

1. Procédé de commande d'un actionneur de passage à baladeur de boîte de vitesses comportant un élément de commande (2) de fourchette de décrabotage et de crabotage (6) de pignons sur un arbre qui reçoit le couple d'une machine de traction alimentée par une batterie haute tension, cet élément de commande (2) étant placé en amont d'un système mécanique d'assistance mécanique à ressort et régulé en position par un moteur d'actionnement à courant continu (1) alimenté par le réseau de bord du véhicule, **caractérisé en ce que**, pendant les opérations de décrabotage et de crabotage des pignons, la tension d'alimentation du réseau de bord est modulée temporairement sur une valeur supérieure à sa tension d'alimentation normale par un convertisseur de courant continu (DC/DC) alimentant ce réseau à partir de la batterie haute tension.

2. Procédé de commande d'un actionneur de passage selon la revendication 1, **caractérisé en ce que** l'élévation de la tension d'alimentation réseau de bord est activée pendant une annulation du couple de la machine de traction du véhicule.

3. Procédé de commande d'un actionneur selon la revendication 2, **caractérisé en ce qu'**il comporte les étapes suivantes :
a) augmentation temporaire de la consigne de tension appliquée par le réseau de bord au moteur d'actionnement (1) pendant l'annulation du couple de la machine de traction du véhicule,
b) dé-crabotage du pignon transmettant le couple sur un premier rapport,
c) synchronisation de l'arbre de boîte et du pignon utilisé sur un deuxième rapport,
d) crabotage du deuxième pignon,
e) retour à la consigne de base sur le réseau de bord lors de la reprise de couple de la machine de traction.

4. Dispositif d'actionnement de passage de vitesses à baladeur comprenant un élément de commande (2) de fourchette de décrabotage et crabotage de pignon de vitesses (6), cet élément de commande étant régulé en position par un moteur d'actionnement à courant continu (1) alimenté par un réseau de bord du véhicule muni d'un organe de modulation de tension, et placé en amont d'un système mécanique d'assistance mécanique à ressort facilitant l'engagement des dents du baladeur entre celles d'un pignon, caractérisé en que l'organe de modulation de tension est un convertisseur de courant continu (DC/DC) qui module temporairement la tension réseau de bord sur une valeur supérieure à la tension d'alimentation normale du réseau de bord pendant les opérations de décrabotage et de crabotage des pignons.

5. Dispositif d'actionnement de passage de vitesses selon la revendication 4, **caractérisée** en ce la consigne d'élévation de la tension du réseau de bord est activée pendant l'annulation du couple de la machine de traction du véhicule précédant le décrabotage d'un pignon.

6. Dispositif d'actionnement de passage de vitesses selon la revendication 5, **caractérisé en ce que** le convertisseur de courant est rétabli sur sa consigne de base après le crabotage d'un nouveau pignon.

## Patentansprüche

1. Verfahren zur Steuerung eines Schaltaktuators mit Getriebeschaltmuffe, umfassend ein Steuerelement (2) mit einer Gabel zum Ausrücken und Einrücken (6) von Zahnrädern auf einer Welle, die das Drehmoment einer Antriebsmaschine empfängt, die von einer Hochspannungsbatterie versorgt wird, wobei dieses Steuerelement (2) stromaufwärts eines mechanischen Systems zur mechanischen Unterstützung mit Feder angeordnet ist und durch einen Gleichstrom-Stellmotor (1), der von dem Bordnetz des Fahrzeugs versorgt wird, positionsgeregelt wird, **dadurch gekennzeichnet, dass** während der Vorgänge des Ausrückens und Einrückens der Zahnräder die Versorgungsspannung des Bordnetzes durch einen Gleichstrom(DC/DC)-Wandler, der dieses Netz von der Hochspannungsbatterie aus versorgt, vorübergehend auf einen Wert moduliert wird, der größer als die normale Versorgungsspannung ist.

2. Verfahren zur Steuerung eines Schaltaktuators nach Anspruch 1, **dadurch gekennzeichnet, dass** die Erhöhung der Bordnetz-Versorgungsspannung während einer Aufhebung des Drehmoments der Antriebsmaschine des Fahrzeugs aktiviert wird.

3. Verfahren zur Steuerung eines Aktuators nach Anspruch 2, **dadurch gekennzeichnet, dass** es die folgenden Schritte beinhaltet:
a) vorübergehendes Anheben des Spannungssollwerts, den das Bordnetz auf den Stellmotor (1) anwendet, während der Aufhebung des Drehmoments der Antriebsmaschine des Fahrzeugs,
b) Ausrücken des Zahnrads, welches das Drehmoment in einem ersten Gang überträgt,
c) Synchronisieren der Getriebewelle und des Zahnrads, das in einem zweiten Gang verwendet wird,
d) Einrücken des zweiten Zahnrads,
e) Zurückkehren zu dem Basissollwert des Bordnetzes bei Wiederherstellung des Drehmoments der Antriebsmaschine.

4. Vorrichtung zur Gangschaltbetätigung mit Schaltmuffe, beinhaltend ein Steuerelement (2) mit einer Gabel zum Ausrücken und Einrücken eines Gangzahnrads (6), wobei dieses Steuerelement durch einen Gleichstrom-Stellmotor (1) positionsgeregelt wird, der von einem Bordnetz des Fahrzeugs versorgt wird, das über ein Organ zur Spannungsmodulation verfügt, und stromaufwärts eines mechanischen Systems zur mechanischen Unterstützung mit Feder angeordnet ist, das den Eingriff der Zähne der Schaltmuffe in die eines Zahnrads erleichtert, **dadurch gekennzeichnet, dass** das Spannungsmodulationsorgan ein Gleichstrom(DC/DC)-Wandler ist, der die Bordnetzspannung während der Vorgänge zum Ausrücken und Einrücken der Zahnräder vorübergehend auf einen Wert moduliert, der größer als die normale Versorgungsspannung des Bordnetzes ist.

5. Vorrichtung zur Gangschaltbetätigung nach Anspruch 4, **dadurch gekennzeichnet, dass** der Erhöhungssollwert der Spannung des Bordnetzes während der Aufhebung des Drehmoments der Antriebsmaschine des Fahrzeugs, die dem Ausrücken eines Zahnrads vorausgeht, aktiviert wird.

6. Vorrichtung zur Gangschaltbetätigung nach Anspruch 5, **dadurch gekennzeichnet, dass** der Stromwandler nach dem Einrücken eines neuen Zahnrads wieder auf seinen Basissollwert eingestellt wird.

## Claims

1. Method for controlling a shift actuator with a sliding gear for a gearbox comprising a control element (2) for controlling a shift fork (6) responsible for disengaging and engaging pinions on a shaft that receives the torque from a traction machine powered by a high-voltage battery, this control element (2) being positioned upstream of a mechanical spring-assist system and regulated in position by a DC actuating motor (1) powered by the on-board electrical system of the vehicle, **characterized in that**, during the operations of disengaging and engaging the pinions, the supply voltage of the on-board electrical system is temporarily modulated on a value greater than its normal supply voltage by a DC/DC converter (DC/DC) supplying this electrical system from the high-voltage battery.

2. Method for controlling a shift actuator according to Claim 1, **characterized in that** the supply voltage of the on-board electrical system is increased during a cancellation of the torque of the traction machine of the vehicle.

3. Method for controlling an actuator according to Claim 2, **characterized in that** it comprises the following steps:
a) temporary increase of the voltage setpoint applied by the on-board electrical system to the actuating motor (1) during the cancellation of the torque of the traction machine of the vehicle,
b) disengagement of the pinion transmitting the torque on a first gear,
c) synchronization of the gearbox shaft and the pinion used on a second gear,
d) engagement of the second pinion,
e) return to the basic setpoint on the on-board electrical system during the reapplication of torque of the traction machine.

4. Gear shift actuating device with a sliding gear comprising a control element (2) for controlling a shift fork (6) responsible for disengaging and engaging a gear pinion, this control element being regulated in position by a direct current actuating motor (1) powered by an on-board electrical system of the vehicle equipped with a voltage modulation element, and placed upstream of a mechanical spring-assist system facilitating the engagement of the teeth of the sliding gear between those of a pinion, **characterized in that** the voltage modulation element is a DC/DC converter (DC/DC) which temporarily modulates the voltage of the on-board electrical system on a value greater than the normal supply voltage of the on-board electrical system during the operations of disengaging and engaging the pinions.

5. Gear shift actuating device according to Claim 4, **characterized in that** the increase setpoint of the voltage of the on-board electrical system is activated during the cancellation of the torque of the traction machine of the vehicle before a pinion is disengaged.

6. Gear shift actuating device according to Claim 5, **characterized in that** the current converter is restored to its basic setpoint after engaging a new pinion.
